(19) Europäisches Patentamt
European Patent Office
Office européen des brevets

(11) **EP 3 006 226 B1**

(12) **EUROPÄISCHE PATENTSCHRIFT**

(45) Veröffentlichungstag und Bekanntmachung des Hinweises auf die Patenterteilung:
**26.12.2018   Patentblatt 2018/52**

(51) Int Cl.:
*B60C 1/00* (2006.01)          *C08L 9/00* (2006.01)
*C08L 9/06* (2006.01)          *C08L 23/20* (2006.01)

(21) Anmeldenummer: **15179480.7**

(22) Anmeldetag: **03.08.2015**

(54) **SCHWEFELVERNETZBARE KAUTSCHUKMISCHUNG UND FAHRZEUGREIFEN**

SULPHUR LINKABLE NATURAL RUBBER MIXTURE AND VEHICLE TYRE

MÉLANGE DE CAOUTCHOUC RÉTICULABLE AU SOUFRE ET PNEUMATIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.10.2014   DE 102014220151
04.03.2015   DE 102015203869**

(43) Veröffentlichungstag der Anmeldung:
**13.04.2016   Patentblatt 2016/15**

(73) Patentinhaber: **Continental Reifen Deutschland GmbH
30165 Hannover (DE)**

(72) Erfinder:
• **Pavon Sierra, Viktoria
30419 Hannover (DE)**
• **Peters, Fabian
30173 Hannover (DE)**

(74) Vertreter: **Finger, Karsten
Continental Aktiengesellschaft
Patente und Lizenzen
Postfach 169
30001 Hannover (DE)**

(56) Entgegenhaltungen:
WO-A1-2015/043790          DE-A1-102010 017 805
US-A1- 2013 053 559          US-A1- 2013 116 376

EP 3 006 226 B1

**Beschreibung**

Die Erfindung betrifft eine schwefelvernetzbare Kautschukmischung und einen Fahrzeugreifen.

Harze, insbesondere Kohlenwasserstoffharze, sind seit langem bekannte Zuschlagstoffe für Kautschukmischungen für Laufstreifen von Fahrzeugluftreifen. Sie dienen vor allem als Verarbeitungshilfsmittel und bewirken die nötige Grünklebrigkeit der Kautschukmischungen. Ferner lassen sich durch Harze bestimmte Vulkanisateigenschaften wie Härte, Modul und Quellverhalten beeinflussen. Sie können auch als Vulkanisationsharze oder Haftvermittler eingesetzt werden. Typische in der Kautschukindustrie eingesetzte Klebharze sind z.B. Petroleumharze, Terpenharze, Kolophoniumharze, Phenol-Formaldehydharze und Cumaron-Inden-Harze. Aliphatische Harze aus Monomeren der Cs-Erdölfraktion bzw. Cs-haltige Copolymere sind als Zuschlagstoffe für Kautschukmischungen bekannt. So beschreibt die WO 2006/061064 A1 die Verwendung von 5 bis 35 phr eines $C_5$/Vinylaromatischem Copolymer in Kombination mit 5 bis 35 phr MES oder TDAE-Öl in einer Kautschukmischung, wobei eine Kautschukmischung mit einem Polymerblend bestehend aus Styrol-Butadien-Kautschuk und Butadien-Kautschuk offenbart wird. Die EP 1707595 B1 offenbart eine Kautschukmischung für eine Seitenverstärkungslage oder einen Wulstkernreiter, die 1 bis 20 phr eines Cs-basierten Petroleumharzes enthält. In der EP 0978533 B1 wird eine Kautschukmischung beschrieben, die 21,5 phr eines Kohlenwasserstoffharzes aus 2-Methyl-2-Buten und 1,3-Pentadien und Dicyclopentadien in Kombination mit 100 phr Styrol-Butadien-Kautschuk enthält.

Die US 2013/0053559 A1 betrifft spezielle Vulkanisationsbeschleuniger für die Vulkanisation von Dienelastomeren und offenbart eine schwefelvernetzbare Kautschukmischung enthaltend: 20 phr eines aliphatischen Kohlenwasserstoffharzes, welches zu 100 Gew.-% aus C5-Monomeren aufgebaut ist ("pure C5") und ein Mz von 3430 g/mol und ein Q von 0,029 °C·g/mol aufweist, und 72 phr eines lösungspolymerisierten SBR.

Die US 2013/0116376 A1 betrifft eine schwefelvernetzbare Kautschukmischung für Fahrzeugreifen enthaltend thermoplastische Materialien, wie beispielsweise Polystyrol-Partikel und offenbart eine schwefelvernetzbare Kautschukmischung enthaltend: 29 phr eines aliphatischen C5-Kohlenwasserstoffharzes mit einem Mz von 2100 g/mol und einem Q von 0,041 °C·g/mol und 100 phr lösungspolymerisierte SBR.

Die WO 2015/043790 A1, nach Art. 54(3) EPÜ, betrifft eine schwefelvernetzbare Kautschukmischung für Fahrzeugluftreifen enthaltend Kohlenwasserstoffharze und 40 bis 100 phr wenigstens eines natürlichen und/oder synthetischen Polyisoprens und offenbart eine schwefelvernetzbare Kautschukmischung enthaltend: 30, 50 oder 70 phr eines aliphatischen C5-Kohlenwasserstoffharzes (Piccotac™ 1095) mit einem Mz von 3500 g/mol und Q von 0,0269 °C·g/mol, und 100 phr Naturkautschuk.

Der vorliegenden Erfindung liegt die Aufgabe zugrunde, eine schwefelvernetzbare Kautschukmischung für Fahrzeugreifen bereitzustellen, die optimierte Eigenschaften hinsichtlich der Traktion auf Schnee sowie einen erhöhten Abriebwiderstand bei gleichen oder verbesserten sonstigen Eigenschaften aufweist. Insbesondere soll bei der Anwendung im Fahrzeugreifen dessen Rollwiderstand sowie das Trocken- und Nassbremsverhalten gleichbleiben, während die Traktion auf Schnee sowie der Abriebwiderstand verbessert werden.

Gleichzeitig sollen die übrigen Eigenschaften und Indikatoren der Kautschukmischung wie insbesondere die Reißeigenschaften und/oder die Handling-Indikatoren, wie die Steifigkeit, nicht signifikant verschlechtert werden oder sogar ebenfalls verbessert werden.

Gelöst wird die Aufgabe erfindungsgemäß dadurch, dass die schwefelvernetzbare Kautschukmischung wenigstens folgende Bestandteile enthält:

- 25 bis 300 phr wenigstens eines Kohlenwasserstoffharzes, welches zu 50 bis 100 Gew.-% aus aliphatischen Cs-Monomeren und zu 0 bis 50 Gew.-% aus weiteren Monomeren aufgebaut ist, wobei das Kohlenwasserstoffharz gemäß Formel I) ein Q von 0,015 [°C·mol/g] bis 0,050 [°C·mol/g] aufweist:

$$\text{I)} \quad Q = \text{Erweichungspunkt [°C]/ Zentrifugenmittelwert Mz [g/mol]},$$

und wobei das Kohlenwasserstoffharz ein Mz von 2500 bis 10000 g/mol aufweist, und

- 50 bis 100 phr wenigstens eines lösungspolymerisierten Dienkautschuks.

Bevorzugte Erfindungen sind in Ansprüche 2 bis 9 definiert.

Eine weitere Aufgabe, die der vorliegenden Erfindung zugrunde liegt, besteht darin einen Fahrzeugreifen bereitzustellen, der eine verbesserte Traktion auf Schnee sowie einen erhöhten Abriebwiderstand aufweist, während die sonstigen Eigenschaften, insbesondere das Rollwiderstandsverhalten sowie die Eigenschaften beim Nass- und Trockenbremsen zumindest auf gleichem Niveau bleiben. Gelöst wird die Aufgabe dadurch, dass der Fahrzeugreifen in wenigstens einem Bauteil wenigstens eine Kautschukmischung mit oben genannten Bestandteilen aufweist. Bevorzugt weist der Fahrzeugreifen die Kautschukmischung wenigstens im Laufstreifen auf. Bei dem Laufstreifen kann es sich um einen Laufstreifen aus einer einzigen Schicht handeln oder um einen Laufstreifen mit einer Cap/Base-Konstruktion, wobei die erfindungsgemäße Kautschukmischung sowohl in der Cap als auch der Base des erfindungsgemäßen Fahrzeugreifens enthalten sein kann. Bevorzugt handelt es sich um einen Laufstreifen mit einer Cap/Base-Konstruktion, wobei die erfindungsgemäße Kautschukmischung wenigstens in der Cap des erfindungsgemäßen Fahrzeugreifens enthalten ist.

Unter "Cap" ist im Rahmen der vorliegenden Erfindung der mit der Fahrbahn in Berührung kommende Teil des Laufstreifens zu verstehen, der radial außen angeordnet ist (Laufstreifencap).

Unter "Base" ist im Rahmen der vorliegenden Erfindung der Teil des Laufstreifens zu verstehen, der radial innen angeordnet ist, und somit im Fahrbetrieb nicht mit der Fahrbahn in Berührung kommt (Laustreifenbase).

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist.

Es wurde gefunden, dass eine schwefelvernetzbare Kautschukmischung enthaltend wenigstens die oben genannten Bestandteile im Laufstreifen von Fahrzeugreifen dessen Traktion auf Schnee verbessert sowie dessen Abriebwiderstand erhöht. Gleichzeitig bleiben der Rollwiderstand sowie die Eigenschaften hinsichtlich Nass- und Trockenbremsen auf gleichem Niveau.

Die übrigen Indikatoren der Kautschukmischung, insbesondere die Zugfestigkeit und die Steifigkeit bleiben auf einem gleichen Niveau oder werden sogar teilweise verbessert.

Im Folgenden werden die Bestandteile der erfindungsgemäßen Kautschukmischung näher beschrieben. Sämtliche Ausführungen gelten auch für den erfindungsgemäßen Fahrzeugreifen, der die erfindungsgemäße Kautschukmischung in wenigstens einem Bauteil aufweist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen Kautschuke bezogen. Die oben genannten Kohlenwasserstoffharze werden im Rahmen dieser Erfindung nicht als Kautschuk betrachtet.

Die erfindungsgemäße Kautschukmischung enthält wenigstens ein Kohlenwasserstoffharz, welches zu 50 bis 100 Gew.-% (Gewichtsprozent bezogen auf die Gesamtmasse des Kohlenwasserstoffharzes) aus aliphatischen Cs-Monomeren und zu 0 bis 50 Gew.-% aus weiteren Monomeren aufgebaut ist. Hierbei ist es denkbar, dass das Kohlenwasserstoffharz aus einem oder mehreren verschiedenen aliphatischen Cs-Monomeren sowie aus einem oder mehreren verschiedenen weiteren Monomeren aufgebaut ist.

Es ist ferner z.B. auch denkbar, dass die erfindungsgemäße Kautschukmischung ein Gemisch verschiedener Kohlenwasserstoffharze mit den genannten Merkmalen enthält. Bevorzugt ist das Kohlenwasserstoffharz zu 55 bis 100 Gew.-%, aus aliphatischen $C_5$-Monomeren aufgebaut. Gemäß Römpp Online Lexikon, Version 3.36 ist "aliphatische Verbindungen" eine "Sammelbezeichnung [...] für funktionalisierte oder unfunktionalisierte organische Verbindungen, die kein aromatisches Ringsystem enthalten."

Das Verhältnis von aliphatischen $C_5$- Monomeren zu weiteren Monomeren im Kohlenwasserstoffharz erfolgt mittels Umrechnung aus dem jeweiligen $^1$H-NMR Spektrum des Kohlenwasserstoffharzes. Dies ist unten beispielhaft für ein Kohlenwasserstoffharz aus aliphatischen $C_5$- Monomeren und aromatischen Monomeren beschrieben.

Hierbei beziehen sich die Angaben der Gew.-% auf die chemische Natur Monomere vor der Polymerisierung zum Kohlenwasserstoffharz, wobei somit ein Molekül wie alpha-Methyl-Styrol trotz aliphatischer Seitenkette als aromatisches Monomer zählt. Ein Kohlenwasserstoffharz, welches nur aus alpha-Methyl-Styrol-Monomeren aufgebaut ist (s. Vergleichsbeispiel), besteht somit zu 100 Gew.-% aus aromatischen Monomeren.

Bei den aliphatischen Cs-Monomeren kann es sich um Monomere der Cs-Erdölfraktion, z.B. Isopren, und/oder Monomere der Terpene und/oder Cycloolefine und/oder Olefine, wie z.B. Penten, handeln. Unter $C_5$ ist zu verstehen, dass diese Monomere aus fünf Kohlenstoffatomen aufgebaut sind.

Ferner ist dem Fachmann bekannt, dass die Cs-Erdölfraktion außer aliphatischen Monomeren mit fünf Kohlenstoffatomen andere aliphatische Monomere (Bausteine) mit z.B. vier, also $C_4$-Monomere, oder sechs Kohlenstoffatomen, $C_6$-Monomere, enthalten kann.

Der Einfachheit halber werden diese, also z.B. $C_4$- und $C_6$-Monomere, im Rahmen der vorliegenden Erfindung unter den weiteren Monomeren genannt und als aliphatische ungesättigte $C_4$-Monomere bzw. aliphatische ungesättigte $C_6$-Monomere bezeichnet.

Das oder die aliphatischen $C_5$-Monomer(e) sind ausgewählt aus der Gruppe enthaltend Isopren und/oder trans-1,3-Pentadien und/oder cis-1,3-Pentadien und/oder 2-Methyl-2-buten und/oder 1-Penten und/oder 2-Penten.

Gemäß einer bevorzugten Weiterbildung der Erfindung ist das bzw. sind die aliphatischen $C_5$-Monomere ausgewählt aus der Gruppe bestehend aus Isopren und/oder trans-1,3-Pentadien und/oder cis-1,3-Pentadien und/oder 2-Methyl-2-buten und/oder 1-Penten und/oder 2-Penten.

Das oder die weiteren Monomer(e) sind ausgewählt aus der Gruppe ungesättigter Verbindungen, die kationisch polymerisiert werden können, enthaltend Aromaten und/oder Terpene und/oder Alkene und/oder Cycloalkene, wobei die oben beschriebenen in der $C_5$-Erdölfraktion enthaltenen aliphatischen Monomere mit mehr oder weniger als fünf Kohlenstoffatomen ebenfalls unter die weiteren Monomere fallen.

Bei den Aromaten (aromatische Monomere) kann es sich beispielsweise um alpha-Methylstyrol und/oder Styrol und/oder Vinyltoluol und/oder Inden und/oder Cumaron und/oder Methylinden und/oder Methylcumaron und/oder Phenol handeln. Gemäß Römpp Online Lexikon, Version 3.36 ist der Begriff "Olefine" die "Gruppenbezeichnung für acyclische und cyclische aliphatische Kohlenwasserstoffe mit einer oder mehreren reaktiven C,C-Doppelbindungen im Molekül, die heute besser als Alkene bzw. Cycloalkene bezeichnet werden, in weiterem Sinne auch Bezeichnung für deren substituierte Derivate...." Im Rahmen der vorliegenden Erfindung werden daher ungesättigte Terpene, Alkene und Cycloalkene unter den Oberbegriff Olefine zusammengefasst.

Bei den Alkenen kann es sich beispielsweise um 1-Buten und/oder 2-Buten und/oder Butadien handeln.

Somit ist das oder sind die weiteren Monomer(e) ausgewählt aus der Gruppe enthaltend alpha-Methylstyrol und/oder Styrol und/oder Vinyltoluol und/oder Inden und/oder Cumaron und/oder Methylinden und/oder Methylcumaron und/oder Phenol und/oder Olefine, wie ungesättigte Terpene und/oder Alkene, wie z.B. 1-Buten und/oder 2-Buten und/oder Butadien, und/oder Dicyclopentadien.

Bevorzugt ist das oder sind die weiteren Monomer(e) ausgewählt aus der Gruppe bestehend aus alpha-Methylstyrol und/oder Styrol und/oder Vinyltoluol und/oder Inden und/oder Cumaron und/oder Methylinden und/oder Methylcumaron und/oder Phenol und/oder Olefinen, wie z.B. 1-Buten und/oder 2-Buten und/oder Butadien, und/oder Dicyclopentadien. Gemäß einer bevorzugten Ausführungsform der Erfindung ist das oder sind die weiteren Monomer(e) ausgewählt aus der Gruppe bestehend aus alpha-Methylstyrol und/oder Styrol und/oder Vinyltoluol und/oder Inden und/oder Cumaron und/oder Methylinden und/oder Methylcumaron und/oder Phenol und/oder aliphatischen ungesättigten $C_4$-Monomeren, wie z.B. 1-Buten und/oder 2-Buten und/oder Butadien, und/oder aliphatischen ungesättigten $C_6$-Monomeren.

Bei dem Vinyltoluol (auch ar-Methylstyrol) kann es sich um p-Vinyltoluol und/oder m-Vinyltoluol und/oder o-Vinyltoluol handeln.

Gemäß einer weiteren bevorzugten Ausführungsform der Erfindung ist eines der weiteren Monomere Dicyclopentadien.

Bevorzugt ist das Kohlenwasserstoffharz zu 0 bis 14 Gew.-% aufgebaut. Gemäß einer bevorzugten Ausführungsform ist das Kohlenwasserstoffharz zu 0,1 bis 14 Gew.-%, besonders bevorzugt 1 bis 14 Gew.-% aus Dicyclopentadien aufgebaut.

Das Kohlenwasserstoffharz kann ein Homopolymer oder ein Copolymer sein. Unter Homopolymer wird in der vorliegenden Anmeldung ein Polymer verstanden, welches gemäß Römpp Online Version 3.28 "aus Monomeren nur einer Art entstanden ist".

Unter Copolymer wird im Rahmen der vorliegenden Erfindung ein Polymer verstanden, welches aus mehreren, d.h. zwei oder mehr, verschiedenen Monomeren aufgebaut ist. Im Rahmen der vorliegenden Erfindung kann das Kohlenwasserstoffharz daher z.B. auch ein Copolymer aus drei verschiedenen Monomeren sein.

In einer bevorzugten Ausführungsform der Erfindung ist das Kohlenwasserstoffharz zu 55 bis 65 Gew.-%, bevorzugt 58 bis 62 Gew.-% aus aliphatischen Cs-Monomeren und zu 35 bis 45 Gew.%, bevorzugt 38 bis 42 Gew.-% aus weiteren Monomeren, bevorzugt aromatischen Monomeren, aufgebaut. Mit wenigstens einem derartigen Kohlenwasserstoffharz werden in der erfindungsgemäßen Kautschukmischung besonders gute Eigenschaften hinsichtlich des Abriebverhaltens und der Traktion auf Schnee erzielt, wobei die Rollwiderstandsindikatoren auf einem guten Niveau bleiben oder sogar ebenfalls verbessert werden.

Das Verhältnis von aliphatischen $C_5$- Monomeren zu aromatischen Monomeren der eingesetzten Kohlenwasserstoffharze wurde mit folgender Methode bestimmt.

Es wurde zunächst vom zu charakterisierenden Harz ein $^1$H-NMR (Spektrometer Avance 360; Frequenz 360 MHz; Probenkopf 10 mm BBO; Lösungsmittel Chloroform-d CDCl$_3$) Spektrum aufgenommen und über die Protonensignale integriert. Das Integral wurde dann in zwei Bereiche aufteilt:

- Aromatischer Bereich (9.0 - 5.8 ppm)
- Aliphatischer/olefinischer Bereich (5.8 - 0 ppm)

| Harz | Integral $^1$H-NMR [%]: 9.0-5.8 ppm (aromatischer Bereich) | Integral $^1$H-NMR [%]: 5.8 - 0 ppm (aliphatischer/ olefinischer Bereich) |
|---|---|---|
| Piccotac 6095-E | 14 | 86 |

Die Berechnung der Zusammensetzung erfolgte bezogenen auf ein theoretisches $^1$H-NMR Spektrum eines Harzes aus alpha-Methylstyrol Monomeren. Ein solches Harz weist nach der Polymerisation fünf aromatische Protonen, sowie fünf aliphatische Protonen auf.

Mit dieser Annahme entstammen folglich 28% der Signale (2*14) von aromatischen Monomeren und 72% von aliphatischen $C_5$- Monomeren.

Zur weiteren Rechnung wurde für die $C_5$- Monomere eine Summenformel von $C_5H10$ angenommen. Somit weisen aromatische wie aliphatische $C_5$- Monomere die gleiche Anzahl an Resonanzen im $^1$H-NMR Spektrum auf. Unter Berücksichtigung der jeweiligen Molgewichte (118 g/mol für alpha-Methylstyrol und 70 g/mol für ein $C_5$- Monomer der Summenformel $C_5H_{10}$) errechnet sich für Piccotac 6095-E eine Zusammensetzung von 60 Gew.-% aliphatischen Cs-Monomerne und 40 Gew.-% aromatischen Monomeren.

In einer weiteren bevorzugten Ausführungsform der Erfindung ist das Kohlenwasserstoffharz zu 95 bis 100 Gew.-%, bevorzugt 100 Gew.-%, aus aliphatischen $C_5$-Monomeren und zu 0 bis 5 Gew.-% aus in der Erdölfraktion enthaltenen $C_4$- oder $C_6$-Monomeren aufgebaut. Mit wenigstens einem derartigen Kohlenwasserstoffharz werden in der erfindungsgemäßen Kautschukmischung besonders gute Eigenschaften hinsichtlich des Abriebverhaltens und der Traktion auf Schnee erzielt, wobei die Rollwiderstandsindikatoren auf einem guten Niveau bleiben oder sogar ebenfalls verbessert werden.

Das in der erfindungsgemäßen Kautschukmischung enthaltene Kohlenwasserstoffharz, weist einen Erweichungspunkt gemäß ASTM E 28 (Ring und Ball) von 60 bis 200 °C, bevorzugt 60 bis 150 °C, besonders bevorzugt 60 bis 120 °C, ganz besonders bevorzugt 60 bis 99 °C, und wiederum ganz besonders bevorzugt 80 bis 99 °C, und wiederum insbesondere bevorzugt von 90 bis 99 °C auf.

Weiterhin weist das in der erfindungsgemäßen Kautschukmischung enthaltene Kohlenwasserstoffharz bevorzugt ein Molekulargewicht $M_w$ (Gewichtsmittel) von 500 bis 4000 g/mol, besonders bevorzugt 1000 bis 3000 g/mol, ganz besonders bevorzugt 1300 bis 2500 g/mol, wiederum besonders bevorzugt 1500 bis 2200 g/mol, wiederum ganz besonders bevorzugt 1500 bis 1900 g/mol, auf.

Weiterhin weist das in der erfindungsgemäßen Kautschukmischung enthaltene Kohlenwasserstoffharz ein Molekulargewicht $M_z$ (Zentrifugenmittelwert) von 2500 bis 10000 g/mol auf, besonders bevorzugt 2500 bis 5000 g/mol, ganz besonders bevorzugt 3000 bis 4500 g/mol, wiederum besonders bevorzugt 3200 bis 4300 g/mol, wiederum ganz besonders bevorzugt 3400 bis 4100 g/mol.

Die Bestimmung des Molekulargewichtes (Gewichtsmittel $M_w$ und Zentrifugenmittelwert $M_z$) erfolgt mittels Gelpermeationschromatographie gemäß DIN 55672-1 (GPC mit Tetrahydofuran als Elutionsmittel, Polystyrol-Standard; Größenausschlußchromatographie; engl. SEC = size exclusion chromatography).

Gemäß einer bevorzugten Weiterbildung der Erfindung ist das Kohlenwasserstoffharz zu 95 bis 100 Gew.-%, bevorzugt 100 Gew.-%, aus aliphatischen Cs-Monomeren und zu 0 bis 5 Gew.-% aus in der Erdölfraktion enthaltenen $C_4$- oder $C_6$-Monomeren aufgebaut und weist ein $M_w$ von 1500 bis 2200 g/mol, wiederum ganz besonders bevorzugt 1500 bis 1900 g/mol, sowie ein $M_z$ von 3200 bis 4300 g/mol, wiederum ganz besonders bevorzugt 3400 bis 4100 g/mol auf. Mit wenigstens einem derartigen Kohlenwasserstoffharz werden in der erfindungsgemäßen Kautschukmischung besonders gute Eigenschaften hinsichtlich des Abriebverhaltens und der Traktion auf Schnee erzielt.

Das in der erfindungsgemäßen Kautschukmischung enthaltene Kohlenwasserstoffharz weist einen möglichst hohen Erweichungspunkt bei einem möglichst niedrigen Zentrifugenmittelwert $M_z$ des Molekulargewichtes auf.

Drückt man dies in einem Quotienten Q gemäß Formel I)

$$I) \qquad Q = \text{Erweichungspunkt } [°C]/ \text{ Zentrifugenmittelwert } M_z\, [\text{g/mol}],$$

also Q gleich Erweichungspunkt geteilt durch Zentrifugenmittelwert,
aus, so beträgt Q 0,015 [°C·mol/g] bis 0,050 [°C·mol/g],
bevorzugt 0,020 [°C·mol/g] bis 0,040 [°C·mol/g],
besonders bevorzugt 0,020 [°C·mol/g] bis 0,035 [°C·mol/g],
ganz besonders bevorzugt 0,022[°C·mol/g] bis 0,030 [°C·mol/g] und wiederum ganz besonders bevorzugt 0,024[°C·mol/g] bis 0,028 [°C·mol/g].

Es hat sich herausgestellt, dass mit einem Kohlenwasserstoffharz, welches diese Bedingungen erfüllt und zu 50 bis 100 Gew.-% aus aliphatischen Cs-Monomeren und zu 0 bis 50 Gew.-% aus weiteren Monomeren aufgebaut ist, im Vergleich zum Stand der Technik, eine überraschend gute Verbesserung der Kautschukmischung hinsichtlich des Abriebwiderstandes und der Traktion auf Schnee erzielt wird. Gemäß einer bevorzugten Ausführungsform der Erfindung weist das Kohlenwasserstoffharz ein Q von 0,020 [°C·mol/g] bis 0,035 [°C·mol/g] auf, wobei sich gegenüber einem Kohlenwasserstoffharz mit einem Q von größer 0,035 [°C·mol/g] die genannten Vorteile ergeben.

Überraschenderweise gelingen die genannten Verbesserungen auch bei sehr hohen Mengen des Kohlenwasserstoffharzes von 25 phr bis 300 phr, bevorzugt 25 bis 100 phr, besonders bevorzugt 30 bis 70 phr, ganz besonders bevorzugt 30 bis 50 phr.

Besonders bevorzugt weist das Kohlenwasserstoffharz hierbei einen Erweichungspunkt von 80 bis 99 °C, wiederum besonders bevorzugt von 85 bis 99°C, wiederum weiter besonders bevorzugt von 90 bis 99 °C auf.

Das Kohlenwasserstoffharz weist hierbei einen Zentrifugenmittelwert $M_z$ von 2500 bis 10000 g/mol auf, besonders bevorzugt von 2500 bis 5000 g/mol, wiederum besonders bevorzugt von 3000 bis 4500 g/mol, wiederum weiter besonders bevorzugt von 3200 bis 4300 g/mol auf, wiederum ganz besonders bevorzugt von 3400 bis 4100 g/mol, auf. Derartige Kohlenwasserstoffharze sind z.B. unter den Handelsnamen Piccotac™ 1095-N (Erweichungspunkt = 94 °C, Zentrifugenmittelwert $M_z$ = 3500 g/mol, Q = 0,0269 [°C·mol/g]) oder

Piccotac™ 6095-E (Erweichungspunkt = 98 °C, Zentrifugenmittelwert Mz = 4000 g/mol, Q = 0,0245 [°C·mol/g]) der Firma Eastman Chemical Company erhältlich.

Die erfindungsgemäße Kautschukmischung enthält wenigstens einen lösungspolymerisierten Dienkautschuk.

Bei dem lösungspolymerisierten Dienkautschuk handelt es sich bevorzugt um lösungspolymerisierten Styrol-Butadien-Kautschuk (SSBR) und/oder lösungspolymerisierten Butadien-Kautschuk (BR, Polybutadien), wobei auch ein Gemisch aus wenigstens einem SSBR und wenigstens einem BR eingesetzt werden kann.

Gemäß einer bevorzugten Ausführungsform der Erfindung handelt es sich bei dem lösungspolymerisierten Dienkautschuk um wenigstens einen lösungspolymerisierten Styrol-Butadien-Kautschuk (SSBR).

Gemäß einer weiteren bevorzugten Ausführungsform der Erfindung enthält die Kautschukmischung wenigstens einen lösungspolymerisierten Styrol-Butadien-Kautschuk (SSBR) und wenigstens einen lösungspolymerisierten Butadien-Kautschuk, wobei die Gesamtmenge aus lösungspolymerisiertem SSBR und lösungspolymerisiertem BR in dieser Ausführungsform 100 phr beträgt. Hiermit werden in der erfindungsgemäßen Kautschukmischung besonders gute Abriebeigenschaften erzielt.

Die Begriffe "Styrol-Butadien-Kautschuk" und "Styrol-Butadien-Copolymer" werden im Rahmen der vorliegenden Erfindung synonym verwendet. Bevorzugt sind in jedem Fall Styrol-Butadien-Copolymere mit einem mittleren Molekulargewicht von 100.000 bis 600.000 g/mol (einhunderttausend bis sechshunderttausend Gramm pro Mol). Das oder die eingesetzte(n) Styrol-Butadien-Copolymere kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Bevorzugt handelt es sich bei dem lösungspolymerisierten Dienkautschuk um wenigstens einen lösungspolymerisierten Styrol-Butadien-Kautschuk (SSBR), wodurch ein besonders gutes Eigenschaftsprofil der Kautschukmischung im Hinblick auf die Anforderungen bei der Anwendung in Fahrzeugreifen, insbesondere im Laufstreifen, ergibt. Hierbei werden neben der Verbesserung der Traktion auf Schnee und des Abriebwiderstandes insbesondere gute Eigenschaften hinsichtlich des Rollwiderstandsverhaltens und des Nass- und Trockenbremsens erzielt, was insbesondere an Indikatoren wie den Rückprallelastizitäten bei 70 °C bzw. Raumtemperatur erkennbar ist.

Bei dem Butadien-Kautschuk (= BR, Polybutadien) kann es sich um alle dem Fachmann bekannten Typen handeln, die lösungspolymerisiert hergestellt werden. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Abriebeigenschaften der Kautschukmischung erzielt. Beispielsweise kann es sich bei dem lösungspolymerisierten Butadien-Kautschuk um einen high-cis-BR wie in EP 2098540 B1 beschrieben handeln. Das eingesetzte Polybutadien kann mit den oben beim Styrol-Butadien-Kautschuk genannten Modifizierungen und Funktionalisierungen endgruppenmodifiziert und/oder entlang der Polymerketten funktionalisiert sein.

Die erfindungsgemäße schwefelvernetzbare Kautschukmischung enthält 50 bis 100 phr wenigstens eines lösungspolymerisierten Dienkautschuks, wobei einer oder mehrere der oben beschriebenen lösungspolymerisierten Styrol-Butadien-Kautschuke und/oder einer oder mehrere der oben beschriebenen Butadien-Kautschuke verwendet werden können.

Gemäß einer bevorzugten Ausführungsform der Erfindung enthält die Kautschukmischung 75 bis 100, bevorzugt 75 bis 95 phr, wenigstens eines lösungspolymerisieiten Styrol-Butadien-Kautschuks und/oder lösungspolymerisiierten Butadien-Kautschuks. Hiermit wird die der Erfindung zu Grunde liegende Aufgabe, insbesondere im Hinblick auf den Abrievwiderstand und die verbesserte Traktion auf Schnee bei gleicihbleibendem Rollwiederstandsverhalten, besonders gut gelöst..

Die erfindugsgemäße Kautschukmischung enthält, wenn sie weniger als 100 phr lösungspolymeriseisierten Dienkautschuk der oben genannten Typen (SSBR und BR) enthält, wenigstnes einen weitern Dienkautschuk, bevorzugt zu Mengen von 0,1 bis 50 phr, bevorzugt 5 bis 50 phr, besonders bevorzugt 5 bis 40 phr, ganz bevorzugt 5 bis 30 phr, wiederum ganz besonders bevorzugt 5 bis 25 phr.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C Doppelbindungen aufweisen.

Der wenigstens eine weitere Dienkautschuk ist dabei ausfewählt aus der Grupper, bestehend aus natürlichem Polyisopren und/oder synthetischen Polyisiopren und/oder emulstionspolymerisierten Styrol-Butadien- Kautschuk (ESBR) und/oder Flüssigkautschuken mit einem Molekulargewicht Mw von größer als 200000 g/mol und/oder Ethylen-Propylen-Dien-Kautschuk und/oder Nitrilkautschuk und/oder Chloroprenkautschuk und/oder AcrylatKautschuk und/oder Fluorkautschuk und/oder

Silikon-Kautschuk und/oder Polysulfidkautschuk und/oder Epichlorhydrinkautschuk und/oder Styrol-Isopren-Butadien-Terpolymer und/oder hydrierter Acrylnitrilbutadienkautschuk und/oder Isopren-Butadien-Copolymer und/oder hydrierter Styrol-Butadien-Kautschuk, wobei die Kautschuke modifiziert sein können. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Insbesondere Nitrilkautschuk, hydrierter Acrylnitrilbutadienkautschuk, Chloroprenkautschuk, Butyl-Kautschuk, Halobutylkautschuk oder Ethylen-Propylen-DienKautschuk kommen bei der Herstellung von technischen Gummiartikeln, wie Gurte, Riemen und Schläuche, zum Einsatz.

Bei dem natürlichen und/oder synthetischen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.
Ferner ist auch ein Gemisch eines oder mehrerer natürlichen Polyisoprene mit einem oder mehreren synthetischen Polyisoprene denkbar.

Gemäß einer bevorzugten Ausführungsform der Erfindung enthält die Kautschukmischung als wenigstens einen weiteren Dienkautschuk wenigstens ein natürliches Polyisopren und/oder wenigstens ein synthetisches Polyisopren, wobei die Gesamtmenge aus natürlichem und/oder synthetischem Polyisopren bevorzugt 0,1 bis 50 phr, besonders bevorzugt 0,1 bis 40 phr, ganz besonders bevorzugt 0,1 bis 30 phr, wiederum bevorzugt 5 bis 30 phr, wiederum besonders bevorzugt 5 bis 25 phr beträgt.

Die erfindungsgemäße Kautschukmischung enthält zudem, insbesondere für die Anwendung im Fahrzeugreifen, wenigstens einen Füllstoff. Bevorzugt enthält sie 10 bis 300 phr, bevorzugt 30 bis 300 phr, besonders bevorzugt 30 bis 150 phr, zumindest eines Füllstoffs.
Hierbei kann es sich um alle dem Fachmann bekannten Füllstoffe handeln, wie Ruß, Kohlenstoffnanoröhrchen oder auch helle Füllstoffe, wie Kieselsäure, Alumosilicate, Schichtsilicate wie Kaolin, Calciumcarbonat (Kreide), Stärke, Magnesiumoxid, Titandioxid, oder Kautschukgele.
Zinkoxid zählt im Rahmen der vorliegenden Erfindung nicht zu den hellen Füllstoffen.

Bevorzugt enthält die Kautschukmischung wenigstens eine Kieselsäure als Füllstoff, bevorzugt in Mengen von 30 bis 200 phr, besonders bevorzugt 50 bis 200 phr, ganz besonders bevorzugt 90 bis 200 phr, wiederum ganz besonders bevorzugt 100 bis 200 phr.

Gemäß einer weiteren bevorzugten Ausführungsform der Erfindung enthält die erfindungsgemäße schwefelvernetzbare Kautschukmischung als wenigstens einen Füllstoff zumindest 0 bis 0,1 phr wenigstens eines Rußes.
Als Füllstoff enthält die erfindungsgemäße Kautschukmischung in dieser Ausführungsform bevorzugt wenigstens einen hellen Füllstoff, wie Kieselsäure, Alumosilicate, Schichtsilicate wie Kaolin, Calciumcarbonat (Kreide), Stärke, Magnesiumoxid, Titandioxid, bevorzugt in Mengen von 10 bis 60 phr, besonders bevorzugt 20 bis 60 phr, ganz besonders bevorzugt 30 bis 60 phr, wiederum ganz besonders bevorzugt 40 bis 50 phr.

Gemäß einer weiteren bevorzugten Ausführungsform der Erfindung enthält die Kautschukmischung als wenigstens einen Füllstoff zumindest 0,1 bis 200 phr, bevorzugt 20 bis 200 phr, besonders bevorzugt 40 bis 200 phr, ganz besonders bevorzugt 50 bis 180 phr, wenigstens einen der oben genannten hellen Füllstoffe, bevorzugt wenigstens eine Kieselsäure.

Die genannten Füllstoffe können in den genannten Mengen auch in Kombination miteinander eingesetzt werden.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 $m^2/g$, bevorzugt von 35 bis 260 $m^2/g$, besonders bevorzugt von 100 bis 260 $m^2/g$ und ganz besonders bevorzugt von 115 bis 235 $m^2/g$, und eine CTAB-Oberfläche (gemäß ASTM D 3765) von 30 bis 400 $m^2/g$, bevorzugt

von 30 bis 250 m$^2$/g, besonders bevorzugt von 80 bis 250 m$^2$/g und ganz besonders bevorzugt von 80 bis 230 m$^2$/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen.

Enthält die erfindungsgemäße Kautschukmischung Ruß, sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist.

Hiermit werden für die Anwendung im Fahrzeugreifen besonders gute Rollwiderstandsindikatoren (Rückprallelastizität bei 70 °C) und Abrieb- und/oder Reißeigenschaften erzielt.

Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar. Auch Graphit und Graphene sowie sogenannte "carbon-silica dual-phase filler" sind als Füllstoff denkbar.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Hierbei können ein oder mehrere verschiedene Silan-Kupplungsagenzien in Kombination miteinander eingesetzt werden. Die Kautschukmischung kann somit ein Gemisch verschiedener Silane enthalten. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH$_2$ oder -S$_x$- (mit x = 2 bis 8).

So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden.

Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 261® der Firma Evonik erhältlich, welches z.B. in der DE 102006004062 A1 beschrieben ist. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363® von der Firma Evonik Industries vertrieben werden. Ferner ist es denkbar, dass eines der oben genannten Mercaptosilane, insbesondere 3-Mercaptopropyltriethoxysilan, in Kombination mit Verarbeitungshilfsmitteln (die unten aufgeführt sind), insbesondere PEG-Carbonsäureester, eingesetzt werden.

Gemäß einer bevorzugten Ausführungsform der Erfindung enthält die Kautschukmischung eine Kombination aus 3-Mercaptopropyltriethoxysilan und PEG-Carbonsäureester, wodurch besonders gute Eigenschaften ergeben, und zwar insbesondere im Hinblick auf die zu lösende technische Aufgabe sowie insgesamt ein gutes Eigenschaftsniveau hinsichtlich der sonstigen Eigenschaften.

Weiterhin kann die Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Die genannten Silane und Aktivatoren werden bei der Herstellung der Kautschukmischung bevorzugt in wenigstens einer Grundmischstufe zugegeben.

Weiterhin ist es vorteilhaft, wenn die erfindungsgemäße Kautschukmischung wenigstens einen Weichmacher enthält, wobei die Gesamtmenge an Weichmacher bevorzugt 5 bis 100 phr, bevorzugt 5 bis 50 phr, beträgt. Hierdurch ergibt sich insbesondere in Kombination mit den oben genannten Bestandteilen eine besonders gute Prozessierbarkeit der Kautschukmischung und insbesondere eines daraus hergestellten Extrudates. Insbesondere durch eine vergleichsweise hohe Menge an Weichmacher von 15 bis 100 phr, bevorzugt 20 bis 100 phr, bevorzugt 24 bis 100 phr, lässt sich die Kautschukmischung, insbesondere mit einem vergleichsweise hohen Füllstoffgehalt von 50 bis 300 phr, gut mischen, wodurch eine homogene Verteilung aller Bestandteile ermöglicht wird.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder pflanzliche Öle, wie insbesondere Rapsöl, oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Faktisse oder Flüssig-Polymere (wie Flüssig-BR), deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.

Der Weichmacher ist bevorzugt ausgewählt aus der Gruppe bestehend aus den oben genannten Weichmachern.

Gemäß einer bevorzugten Ausführungsform der Erfindung enthält die Kautschukmischung wenigstens ein Mineralöl als Weichmacher. Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Gemäß einer weiteren bevorzugten Ausführungsform der Erfindung enthält die Kautschukmischung wenigstens ein pflanzliches Öl, insbesondere Rapsöl, als Weichmacher.

Gemäß einer weiteren bevorzugten Ausführungsform der Erfindung enthält die Kautschukmischung wenigstens ein Flüssig-BR als Weichmacher.

Im Rahmen der vorliegenden Erfindung zählen die Flüssig-BR, deren mittleres Molekulargewicht (Bestimmung per GPC = gel permeation chromatography, in Anlehnung an BS ISO 11344:2004) zwischen 500 und 20000 g/mol liegt, formal nicht zu den lösungspolymerisierten Dienkautschuken und gehen daher wie oben beschrieben nicht als Kautschuk in die Hundert Teile Kautschuk bei der phr-Berechnung ein.

Es ist auch denkbar, dass ein Gemisch der genannten Weichmacher, insbesondere der unter den bevorzugten Ausführungsformen genannten Weichmacher, in der erfindungsgemäßen Kautschukmischung enthalten ist.

Der oder die Weichmacher werden bei der Herstellung der erfindungsgemäßen Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen

a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure),
c) Wachse,
d) weitere Harze, insbesondere Klebharze, die nicht unter die oben genannten Kohlenwasserstoffharze fallen,
e) Mastikationshilfsmittel, wie z. B. 2,2'-Dibenzamidodiphenyldisulfid (DBD) und
f) Verarbeitungshilfsmittel, wie z.B. Fettsäuresalze, wie z.B. Zinkseifen, und Fettsäureester und deren Derivate.

Insbesondere bei der Verwendung der erfindungsgemäßen Kautschukmischung für die inneren Bauteile eines Reifens oder eines technischen Gummiartikels, welche direkten

Kontakt zu vorhandenen Festigkeitsträgern haben, wird der Kautschukmischung in der Regel noch ein geeignetes Haftsystem, oft in Form von Klebharzen, zugefügt.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid (ZnO).

Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 $m^2$/g auf. Es kann aber auch ein Zinkoxid mit einer BET-Oberfläche von 10 bis 100 $m^2$/g, wie z.B. so genannte "nano-Zinkoxide", verwendet werden.

Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.

Die Vulkanisation der erfindungsgemäßen schwefelvernetzbaren Kautschukmischung wird bevorzugt in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B. DipDis (Bis-(Diisopropyl)thiophosphoryldisulfid) und/oder Bis(O,O-2-ethylhexyl-thiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel A):

$$A) \qquad G[C_aH_{2a}\text{-}CH_2\text{-}S_bY]_c$$

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5.

Die kautschukaktive Gruppe ist bevorzugt ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe). Hiermit werden sehr gute Abrieb- und Reißeigenschaften der erfindungsgemäßen Kautschukmischung erzielt.

Im Rahmen der vorliegenden Erfindung werden Schwefel und Schwefelspender, inklusive schwefelspendende Silane wie TESPT, und Vulkanisationsbeschleuniger wie oben beschrieben und Vulkanisationsmittel, die mit einer Funktionalität größer vier vernetzen, wie in der WO 2010/049216 A2 beschrieben, wie z.B. ein Vulkanisationsmittel der Formel A), sowie die oben genannten Systeme Vulkuren®, Duralink® und Perkalink® begrifflich als Vulkanisationsmittel zusammengefasst.

Der erfindungsgemäßen Kautschukmischung werden bei deren Herstellung bevorzugt wenigstens ein Vulkanisationsmittel ausgewählt aus der Gruppe enthaltend, besonders bevorzugt bestehend aus, Schwefel und/oder Schwefelspender und/oder Vulkanisationsbeschleuniger und/oder Vulkanisationsmittel, die mit einer Funktionalität größer vier vernetzen, zugegeben. Hierdurch lässt sich aus der erfindungsgemäßen Kautschukmischung ein Vulkanisat, insbesondere für die Anwendung im Fahrzeugreifen, herstellen.

Gemäß einer bevorzugten Weiterbildung der Erfindung werden mehrere Beschleuniger der Kautschukmischung zugegeben.

Besonders bevorzugt ist die Verwendung der Beschleuniger TBBS und/oder CBS und/oder Diphenylguanidin (DPG).

Außerdem können in der Kautschukmischung Vulkanisationsverzögerer vorhanden sein.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, wie dem Laufstreifen und/oder der Seitenwand und/oder in wenigstens einem inneren Bauteil.

Als Body-Mischung werden hierbei die Kautschukmischungen für die inneren Bauteile eines Reifen bezeichnet. Als innere Reifenbauteile werden im Wesentlichen Squeegee, Seitenwand, Innenseele (Innenschicht), Kernprofil, Gürtel, Schulter, Gürtelprofil, Karkasse, Wulstverstärker, Wulstprofil, Hornprofil und Bandage bezeichnet.

Bevorzugt wird die erfindungsgemäße Kautschukmischung jedoch in Laufstreifen von Fahrzeugreifen verwendet, bevorzugt hierbei wenigstens in der Cap von Laufstreifen mit Cap/Base-Konstruktion.

Zur Verwendung in Fahrzeugreifen wird die Mischung bevorzugt in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, kann aber auch in Form eines schmalen Kautschukmischungsstreifens auf einen Reifenrohling aufgewickelt werden. Bei zweigeteilten Laufstreifen (oberer Teil: Cap und unterer Teil: Base) kann die erfindungsgemäße Kautschukmischung sowohl für die Cap als auch für die Base verwendet werden.

Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen.

Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Zur Verwendung der erfindungsgemäßen Kautschukmischung in Schläuchen wird häufig keine so genannte Schwefelvernetzung, sondern eine peroxidische Vernetzung bevorzugt. Die Herstellung der Schläuche erfolgt analog dem im Handbuch der Kautschuktechnologie, Dr. Gupta Verlag, 2001, Kapitel 13.4 beschriebenen Verfahren.

Die Erfindung soll nun anhand von Vergleichs- und Ausführungsbeispielen, die in den Tabellen 1, 2 und 3 zusammengefasst sind, näher erläutert werden.

Die Vergleichsbeispiele sind mit V, die erfindungsgemäßen Beispiele sind mit E gekennzeichnet.

Die Mischungsherstellung erfolgte nach dem in der Kautschukindustrie üblichen Verfahren unter üblichen Bedingungen in zwei Stufen in einem Tangentialmischer (Tabelle 1) oder einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. Durch Zugabe des Vulkanisationssystems in der zweiten Stufe (Fertigmischstufe) wurde die Fertigmischung erzeugt, wobei bei 90 bis 120 °C gemischt wurde.

Das allgemeine Verfahren zur Herstellung von Kautschukmischungen und deren Vulkanisate ist in "Rubber Technology Handbook", W. Hofmann, Hanser Verlag 1994 beschrieben.

Aus sämtlichen Mischungen wurden Prüfkörper durch Vulkanisation nach $t_{95}$ (gemessen am Moving Disc Rheometer gemäß ASTM D 5289-12/ ISO 6502) unter Druck bei 160°C hergestellt und mit diesen Prüfkörpern für die Kautschukindustrie typische Materialeigenschaften mit den im Folgenden angegebenen Testverfahren ermittelt.

- Shore-A-Härte bei Raumtemperatur (RT) gemäß DIN ISO 7619-1
- Rückprallelastizität bei RT und 70 °C gemäß DIN 53 512
- Bruchdehnung und Spannungswerte bei 50% sowie 300% Dehnung (Modul 50 und Modul 300) bei Raumtemperatur gemäß DIN 53 504
- dynamischer Speichermodul E' bei -15 °C und einer Dehnung von 0,15 % aus dynamisch-mechanischer Messung in Anlehnung an DIN 53 513, Dehnungsdurchlauf (engl. "strain sweep") bei einer Vorkompression von 20 %, einer Frequenz von 10 Hz und einem Dehnungsbereich zwischen 0,15 % und 8%

Reifentests

Die ermittelten Werte wurden in Performance (Leistung) umgerechnet, wobei die Vergleichsmischung V1 bei jeder getesteten Eigenschaft auf 100 % Performance normiert wurde. Alle anderen Mischungsleistungen beziehen sich auf diese Vergleichsmischung V1. Hierbei bedeuten Werte < 100 % eine Verschlechterung in der Eigenschaften, während Werte > 100 % eine Verbesserung darstellen.

- Rollwiderstand: gemäß ISO 28580
- Nassbremsen: ABS-Bremsen aus 80 km/h, nasser Asphalt, niedriges $\mu$ (low $\mu$)
- Trockenbremsen: ABS-Bremsen aus 100 km/h, trockener Asphalt, hohes $\mu$ (high $\mu$)
- Traktion - Schnee: Beschleunigung auf Schnee und Bestimmung der Traktionskraft
- Abrieb: Gewichtsverlust der jeweiligen Reifen nach 8800 km Straßenfahrt bei einer mittleren Temperatur von + 15 °C

Verwendete Substanzen

a) Naturkautschuk TSR
b) SSBR: Sprintan™ SLR 3402, Fa. Styron
c) Kieselsäure Zeosil® 1165 MP, Fa. Rhodia
d) Weichmacher LLBR-307, Fa. Kuraray

e) Kohlenwasserstoffharz: Sylvares® SA 85, Fa. Arizona Chemical, 100 Gew.-% aromatisches Kohlenwasserstoffharz, $M_w$ = 1200 g/mol, $M_z$ = 1900 g/mol; EP = 85 °C; Q = 0,039 [°C·mol/g]

f) Kohlenwasserstoffharz: Piccotac™ 1095-N, Firma Eastman Chemical Company, aliphatisches Cs-Kohlenwasserstoffharz, 0 Gew.-% aromatische Monomere $M_w$ = 1700 g/mol, $M_z$ = 3500 g/mol; EP = 94 °C; Q = 0,0269 [°C·mol/g]

g) Kohlenwasserstoffharz: Piccotac™ 6095-E, Firma Eastman Chemical Company, 60 Gew.-% aliphatische $C_5$-Monomere, 40 Gew.-% aromatische Monomere; $M_w$ = 1700 g/mol, $M_z$ = 4000 g/mol; EP = 98 °C; Q = 0,0245 [°C·mol/g]

h) Sonstige Zusatzstoffe: Alterungsschutzmittel 6PPD, Zinkoxid, Stearinsäure, Silan-Kupplungsagens

i) Schwefel und Beschleuniger CBS

j) Weichmacher: Vivatec C500, Fa. Thai Base Public Company Ltd.

k) ESBR: Intol 1739, Fa. Eni

Wie an der Tabelle 1 zu erkennen ist, führen die erfindungsgemäßen Kautschukmischungen E1 und E2 im Laufstreifen von Fahrzeugreifen zu einer Verbesserung des Verhaltens bei der Traktion auf Schnee sowie einen erhöhten (verbesserten) Abriebwiderstand im Vergleich zu der Vergleichsmischung V1, welche ein anderes Kohlenwasserstoffharz enthält als gemäß Anspruch 1.

Wie an den Tabellen 2 und 3 zu erkennen ist, weisen die erfindungsgemäßen Kautschukmischungen E3 bis E7 im Vergleich zu ihren jeweiligen Vergleichsmischungen (mit jeweils gleichem Polymersystem) V2, V3 bzw. V4 einen verringerten dynamischen Speichermodul E' bei -15 °C auf. Je kleiner E' bei -15 °C einer Kautschukmischung desto besser ist das zu erwartende Verhalten bei der Traktion auf Schnee, insbesondere im Laufstreifen von Fahrzeugreifen. Die erfindungsgemäßen Kautschukmischungen zeigen somit bei vergleichbaren sonstigen physikalischen Eigenschaften verbesserte Indikatoren für das Verhalten im Laufstreifen von Fahrzeugreifen unter winterlichen Bedingungen.

Tabelle 1

| Bestandteile | Einheit | **V1** | **E1** | E2 |
|---|---|---|---|---|
| NR a) | phr | 10 | 10 | 10 |
| SSBR b) | phr | 90 | 90 | 90 |
| Kieselsäure c) | phr | 125 | 125 | 125 |
| Ruß N 399 | phr | 4,7 | 4,7 | 4,7 |
| Weichmacher j) | phr | 27 | 27 | 27 |
| KW-Harz e) | phr | 30 | - | - |
| KW-Harz f) | phr | - | 30 | - |
| KW-Harz g) | phr | - | - | 30 |
| Sonst. Zus. h) | phr | 26 | 26 | 26 |
| S und Beschleuniger i) | phr | 5,2 | 5,2 | 5,2 |
| Physikalische Eigenschaften | | | | |
| Shore Härte A b. RT | Shore A | 58 | 59 | 58 |
| Rückpr. b. RT | % | 28 | 28 | 28 |
| Rückpr. b. 70 °C | % | 46 | 46 | 45 |
| Bruchdehnung | % | 522 | 552 | 536 |
| Modul 50 | MPa | 1,1 | 1,1 | 1,1 |
| Modul 300 | MPa | 7,8 | 7,4 | 7,0 |
| Reifenergebnisse | | | | |
| Rollwiderstand | % | 100 | 100 | 100 |
| Nassbremsen | % | 100 | 100 | 100 |
| Trockenbremsen | % | 100 | 100 | 100 |
| Traktion - Schnee | % | 100 | 102 | 103 |
| Abriebwiderstand | % | 100 | 106 | 106 |

Tabelle 2

| Bestandteile | Einheit | V2 | E3 | E4 |
|---|---|---|---|---|
| NR [a] | phr | 25 | 25 | 25 |
| SSBR [b] | phr | 75 | 75 | 75 |
| Kieselsäure [c] | phr | 125 | 125 | 125 |
| Ruß N 399 | phr | 4,7 | 4,7 | 4,7 |
| Weichmacher [d] | phr | 27 | 27 | 27 |
| KW-Harz [e] | phr | 30 | - | - |
| KW-Harz [f] | phr | - | 30 | - |
| KW-Harz [g] | phr | - | - | 30 |
| Sonst. Zus. [h] | phr | 26 | 26 | 26 |
| S und Beschleuniger [i] | phr | 5,2 | 5,2 | 5,2 |
| **Physikalische Eigenschaften** | | | | |
| Shore Härte A b. RT | Shore A | 62 | 61 | 60 |
| Rückpr. b. RT | % | 28 | 27 | 29 |
| Rückpr. b. 70 °C | % | 50 | 49 | 51 |
| Bruchdehnung | % | 458 | 496 | 474 |
| Modul 50 | MPa | 1,2 | 1,1 | 1,1 |
| Modul 300 | MPa | 10,5 | 9,3 | 9,4 |
| E' b. -15 °C | MPa | 59,7 | 52,1 | 51,8 |

Tabelle 3

| Bestandteile | Einheit | V3 | E5 | V4 | E6 | E7 |
|---|---|---|---|---|---|---|
| NR [a] | phr | 10 | 10 | 50 | 50 | 50 |
| SSBR [b] | phr | 50 | 50 | 50 | 50 | 50 |
| ESBR [k] | phr | 55 | 55 | - | - | - |
| Kieselsäure [c] | phr | 125 | 125 | 125 | 125 | 125 |
| Ruß N 399 | phr | 4,7 | 4,7 | 4,7 | 4,7 | 4,7 |
| Weichmacher [d] | phr | 12 | 12 | 27 | 27 | 27 |
| KW-Harz [e] | phr | 30 | - | 30 | - | - |
| KW-Harz [f] | phr | - | - | - | - | 30 |
| KW-Harz [g] | phr | - | 30 | - | 30 | - |
| Sonst. Zus. [h] | phr | 26 | 26 | 26 | 26 | 26 |
| S und Beschleuniger [i] | phr | 5,2 | 5,2 | 5,2 | 5,2 | 5,2 |
| **Physikalische Eigenschaften** | | | | | | |
| Shore Härte A b. RT | Shore A | 64 | 63 | 61 | 63 | 61 |
| Rückpr. b. RT | % | 24 | 22 | 24 | 25 | 24 |
| Rückpr. b. 70 °C | % | 47 | 46 | 47 | 46 | 45 |
| Bruchdehnung | % | 484 | 479 | 506 | 486 | 553 |

(fortgesetzt)

| Physikalische Eigenschaften | | | | | | |
|---|---|---|---|---|---|---|
| Modul 50 | MPa | 1,3 | 1,2 | 1,1 | 1,1 | 1,0 |
| Modul 300 | MPa | 10,0 | 9,8 | 8,9 | 9,1 | 8,1 |
| E' b. -15 °C | MPa | 75,5 | 55,8 | 66,4 | 48,7 | 58,6 |

**Patentansprüche**

1. Schwefelvernetzbare Kautschukmischung enthaltend wenigstens folgende Bestandteile:

   - 25 bis 300 phr wenigstens eines Kohlenwasserstoffharzes, welches zu 50 bis 100 Gew.-% aus aliphatischen Cs-Monomeren und zu 0 bis 50 Gew.-% aus weiteren Monomeren aufgebaut ist, wobei das Kohlenwasserstoffharz gemäß Formel I) ein Q von 0,015 [°C·mol/g] bis 0,050 [°C·mol/g] aufweist:

   $$\text{I)} \qquad Q = \text{Erweichungspunkt [°C]/ Zentrifugenmittelwert Mz [g/mol]},$$

   und wobei das Kohlenwasserstoffharz ein Mz von 2500 bis 10000 g/mol aufweist, wobei die Bestimmung des Zentrifugenmittelwerts Mz mittels Gelpermeationschromatographie gemäß DIN 55672-1 erfolgt, und
   - 50 bis 100 phr wenigstens eines lösungspolymerisierten Dienkautschuks.

2. Schwefelvernetzbare Kautschukmischung nach Anspruch 1, **dadurch gekennzeichnet, dass** sie 75 bis 95 phr wenigstens eines lösungspolymerisierten Dienkautschuks enthält.

3. Schwefelvernetzbare Kautschukmischung nach Anspruch 2, **dadurch gekennzeichnet, dass** es sich bei dem lösungspolymerisierten Dienkautschuk um wenigstens einen lösungspolymerisierten Styrol-Butadien-Kautschuk handelt.

4. Schwefelvernetzbare Kautschukmischung nach einem der vorherigen Ansprüche, **dadurch gekennzeichnet, dass** das oder die weitere(n) Monomer(e) des Kohlenwasserstoffharzes ausgewählt ist oder sind aus der Gruppe ungesättigter Verbindungen, die kationisch polymerisiert werden können, enthaltend Aromaten und/oder ungesättigte Terpene und/oder Alkene und/oder Cycloalkene.

5. Schwefelvernetzbare Kautschukmischung nach Anspruch 4, **dadurch gekennzeichnet, dass** das oder die weitere(n) Monomer(e) ausgewählt ist oder sind aus der Gruppe bestehend aus alpha-Methylstyrol und/oder Styrol und/oder Vinyltoluol und/oder Inden und/oder Cumaron und/oder Methylinden und/oder Methylcumaron und/oder Phenol und/oder Dicyclopentadien und/oder Olefinen.

6. Schwefelvernetzbare Kautschukmischung nach einem der vorherigen Ansprüche, **dadurch gekennzeichnet, dass** sie 25 bis 100 phr des Kohlenwasserstoffharzes enthält.

7. Schwefelvernetzbare Kautschukmischung nach einem der vorherigen Ansprüche, **dadurch gekennzeichnet, dass** das Kohlenwasserstoffharz ein Molekulargewicht $M_w$ (Gewichtsmittel) von 500 bis 4000 g/mol und ein Zentrifugenmittelwert $M_z$ von 2500 bis 10000 g/mol aufweist.

8. Schwefelvernetzbare Kautschukmischung nach einem der vorherigen Ansprüche, **dadurch gekennzeichnet, dass** das Kohlenwasserstoffharz einen Erweichungspunkt gemäß ASTM E 28 (Ring und Ball) von 60 bis 99 °C aufweist.

9. Schwefelvernetzbare Kautschukmischung nach Anspruch 5, **dadurch gekennzeichnet, dass** das Kohlenwasserstoffharz zu 0 bis 14 Gew.-% aus Dicyclopentadien aufgebaut ist.

10. Fahrzeugreifen, **dadurch gekennzeichnet, dass** er in wenigstens einem Bauteil wenigstens eine schwefelvernetzbare Kautschukmischung nach einem der Ansprüche 1 bis 9 aufweist.

**11.** Fahrzeugreifen nach Anspruch 10, **dadurch gekennzeichnet, dass** er die Kautschukmischung wenigstens im Laufstreifen aufweist.

**Claims**

**1.** Sulfur-crosslinkable rubber mixture comprising at least the following constituents:

- 25 to 300 phr of at least one hydrocarbon resin formed to an extent of 50% to 100% by weight from aliphatic $C_5$ monomers and to an extent of 0% to 50% by weight from further monomers, where the hydrocarbon resin of formula I) has a Q of 0.015 [°C·mol/g] to 0.050 [°C·mol/g]:

$$\text{I)} \quad \text{Q = softening point [°C]/centrifuge average Mz [g/mol],}$$

and where the hydrocarbon resin has an Mz of 2500 to 10 000 g/mol, where the centrifuge average Mz is determined by means of gel permeation chromatography to DIN 55672-1, and
- 50 to 100 phr of at least one solution-polymerized diene rubber.

**2.** Sulfur-crosslinkable rubber mixture according to Claim 1, **characterized in that** it contains 75 to 95 phr of at least one solution-polymerized diene rubber.

**3.** Sulfur-crosslinkable rubber mixture according to Claim 2, **characterized in that** the solution-polymerized diene rubber is at least one solution-polymerized styrene butadiene rubber.

**4.** Sulfur-crosslinkable rubber mixture according to any of the preceding claims, **characterized in that** the further monomer(s) in the hydrocarbon resin is/are selected from the group of unsaturated compounds that can be cationically polymerized, comprising aromatics and/or unsaturated terpenes and/or alkenes and/or cycloalkenes.

**5.** Sulfur-crosslinkable rubber mixture according to Claim 4, **characterized in that** the further monomer(s) is/are selected from the group consisting of alphamethylstyrene and/or styrene and/or vinyltoluene and/or indene and/or coumarone, and/or methylindene and/or methylcoumarone and/or phenol and/or dicyclopentadiene and/or olefins.

**6.** Sulfur-crosslinkable rubber mixture according to any of the preceding claims, **characterized in that** it contains 25 to 100 phr of the hydrocarbon resin.

**7.** Sulfur-crosslinkable rubber mixture according to any of the preceding claims, **characterized in that** the hydrocarbon resin has a molecular weight $M_w$ (weight average) of 500 to 4000 g/mol and a centrifuge average Mz of 2500 to 10 000 g/mol.

**8.** Sulfur-crosslinkable rubber mixture according to any of the preceding claims, **characterized in that** the hydrocarbon resin has a softening point to ASTM E 28 (ring and ball) of 60 to 99°C.

**9.** Sulfur-crosslinkable rubber mixture according to Claim 5, **characterized in that** the hydrocarbon resin is formed to an extent of 0% to 14% by weight from dicyclopentadiene.

**10.** Vehicle tyre, **characterized in that** it includes at least one sulfur-crosslinkable rubber mixture according to any of Claims 1 to 9 in at least one component.

**11.** Vehicle tyre according to Claim 10, **characterized in that** it includes the rubber mixture at least in the tread.

**Revendications**

**1.** Mélange de caoutchouc réticulable au soufre contenant au moins les constituants suivants :

- 25 à 300 pce d'au moins une résine hydrocarbonée, qui est formée par 50 à 100 % en poids de monomères

en C$_5$ aliphatiques et 0 à 50 % en poids d'autres monomères, la résine hydrocarbonée présentant selon la formule I) un Q de 0,015 [°C·mol/g] à 0,050 [°C·mol/g] :

```
I)    Q = point de ramollissement [°C]/valeur moyenne de
centrifugation Mz [g/mol],
```

et la résine hydrocarbonée présentant un Mz de 2 500 à 10 000 g/mol, la détermination de la valeur moyenne de centrifugation Mz ayant lieu par chromatographie par perméation de gel selon DIN 55672-1, et
- 50 à 100 pce d'au moins un caoutchouc diénique polymérisé en solution.

2. Mélange de caoutchouc réticulable au soufre selon la revendication 1, **caractérisé en ce qu'**il contient 75 à 95 pce d'au moins un caoutchouc diénique polymérisé en solution.

3. Mélange de caoutchouc réticulable au soufre selon la revendication 2, **caractérisé en ce que** le caoutchouc diénique polymérisé en solution consiste en au moins un caoutchouc de styrène-butadiène polymérisé en solution.

4. Mélange de caoutchouc réticulable au soufre selon l'une quelconque des revendications précédentes, **caractérisé en ce que** le ou les autres monomères de la résine hydrocarbonée est ou sont choisis dans le groupe constitué par les composés insaturés qui peuvent être polymérisés cationiquement, contenant les composés aromatiques et/ou les terpènes insaturés et/ou les alcènes et/ou les cycloalcènes.

5. Mélange de caoutchouc réticulable au soufre selon la revendication 4, **caractérisé en ce que** le ou les autres monomères est ou sont choisis dans le groupe constitué par l'alpha-méthylstyrène et/ou le styrène et/ou le vinyltoluène et/ou l'indène et/ou la coumarone et/ou le méthylindène et/ou la méthylcoumarone et/ou le phénol et/ou le dicyclopentadiène et/ou les oléfines.

6. Mélange de caoutchouc réticulable au soufre selon l'une quelconque des revendications précédentes, **caractérisé en ce qu'**il contient 25 à 100 pce de la résine hydrocarbonée.

7. Mélange de caoutchouc réticulable au soufre selon l'une quelconque des revendications précédentes, **caractérisé en ce que** la résine hydrocarbonée présente un poids moléculaire M$_w$ (moyenne en poids) de 500 à 4 000 g/mol et une valeur moyenne de centrifugation M$_z$ de 2 500 à 10 000 g/mol.

8. Mélange de caoutchouc réticulable au soufre selon l'une quelconque des revendications précédentes, **caractérisé en ce que** la résine hydrocarbonée présente un point de ramollissement selon ASTM E 28 (anneau et bille) de 60 à 99 °C.

9. Mélange de caoutchouc réticulable au soufre selon la revendication 5, **caractérisé en ce que** la résine hydrocarbonée est formée par 0 à 14 % en poids de dicyclopentadiène.

10. Pneu de véhicule, **caractérisé en ce qu'**il comprend dans au moins un composant au moins un mélange de caoutchouc réticulable au soufre selon l'une quelconque des revendications 1 à 9.

11. Pneu de véhicule selon la revendication 10, **caractérisé en ce qu'**il comprend le mélange de caoutchouc au moins dans la bande de roulement.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006061064 A1
- EP 1707595 B1
- EP 0978533 B1
- US 20130053559 A1
- US 20130116376 A1
- WO 2015043790 A1
- EP 2098540 B1
- DE 102006004062 A1

- WO 9909036 A
- WO 2008083241 A1
- WO 2008083242 A1
- WO 2008083243 A1
- WO 2008083244 A1
- EP 2589619 A1
- WO 2010049216 A2

**In der Beschreibung aufgeführte Nicht-Patentliteratur**

- Handbuch der Kautschuktechnologie. Dr. Gupta Verlag, 2001

- **W. HOFMANN.** Rubber Technology Handbook. Hanser Verlag, 1994